# EUROPEAN PATENT APPLICATION

(11) **EP 1 297 896 A2**
(43) Date of publication of application: **02.04.2003**
(21) Application number: 02380203.6
(22) Date of filing: 27.09.2002
(51) Int. Cl.: B05B 9/08

(54) **Manual sprayer for pesticides and herbicides**

(30) Priority: 28.09.2001 ES 200102181
(71) Applicant: Central Agricola Bovi, S.L., 25004 Lleida (ES)
(72) Inventor: Bonet Villoria, Fernando, 25004 Lleida (ES); Fenollosa Artés, Felip, 25004 Lleida (ES)
(74) Representative: Carpintero Lopez, Francisco

(57) **Abstract**

The sprayer is comprised of a tank (1) with double curvature, in both a horizontal and a vertical sense, providing an ambidextrous use and a correct adaptation to the user's back. The pumping unit mounted on the tank (1) is provided with a cylinder (19) attached by a nut (5) on a neck of the corresponding opening provided on the top of the tank (1), while on its bottom and at a segment with a smaller diameter (19) it rests on a filter (29) that also serves as a support for the cylinder (19) and to assemble the intake valve (25) between the tank (1) and the compression chamber (24). The cylinder (19) includes a piston (20) with an inner independent channel (21) where the suction duct (22) is mounted, placed between the top lid (12) of the piston (20) and a cavity (23) of the lower part of the piston, under which is provided a valve (26) for communication between the compression chamber (24) and the lower end of the suction duct (22). The tank (1) is provided with pairs of legs (7) that allow assembly on either side of the manually actuated lever (8).

## Description

### OBJECT OF THE INVENTION

The present invention relates to a lever-actuated manual sprayer, of those known as backpack sprayers, which is provided with a tank containing the product to be sprayed and a pumping unit actuated by a manual lever, as well as straps for securing the unit on the user's back.

The object of the invention is to provide a unit of the aforementioned type for spraying phytosanitary liquids and leaf and herbicidal applications on fruit, horticultural, cereal, leguminous etc. crops, as well as in parks and gardens, which equipment incorporates a number of improvements over conventional ones concerning the ergonomics of the tank and the interchangeable lever mounting system, as well as the pumping unit as a whole and even the means for assembling and removing the support straps, resulting in a greater comfort for the user and a more efficient and better operation.

### BACKGROUND OF THE INVENTION

Lever-actuated sprayers used in phytosanitary and other applications, and specifically backpack type sprayers, are basically comprised of: a tank containing the product to be sprayed; a pumping system based on a piston mounted above a cylinder with valves and a product suction duct; a manually operated lever; and the corresponding support straps and other means and components that complete the equipment to enable its operation.

Certain sprayers of this type have a tank designed with ergonomic areas on both sides to conform to the user's back, although these areas generally do not encompass the entire area of contact with the back. In general, this is a band of material in the lumbar zone with a certain curvature, so that the other areas in contact with the back (shoulder blades, area above the lumbar zone, column, etc.) has no adaptation considered to the anatomical shape, in general having a lumbar support on one or both sides.

It is common in this type of sprayers for the pumping force actuation to be optimised by displacing the hinge point out of the plane of symmetry of the equipment, as the piston of the pumping system is exactly centred on said plane. If an ambidextrous equipment is desired the need arises to allow changing the disposition of the shaft. This is also solved in products available in the market that provide orifices for the shaft on either side of the equipment.

Units provided with a mobile shaft have a complex operation for changing the rotation axis, as manual tools are needed, so that the shaft must be changed by the distributor of the product, who must modify a right-handed product upon a request for a left-handed one. Thus, in practice it is not possible to conceive such a change during a working day in the field, while maintaining optimal working conditions.

Another aspect to consider is the difficulty encountered with conventional sprayers for assembling and removing the sprayer support straps in order to perform an operative change in the equipment.

In addition, in conventional sprayer units the pumping group has a number of disadvantages, among which is that the suction duct for the product to be sprayed runs inside the chamber formed by the corresponding piston, the duct in turn being mounted on the lid of the piston to then secure the lid indestructibly to the piston body. The result is that in the event of a poor assembly or welding of the duct, or wear due to occlusion, etc., the entire piston must be replaced by a new assembly and it is not possible to replace only the suction duct.

In addition, malfunctions of the suction duct can occur gradually: before its final failure the user may have suffered a reduced performance for a long time without being aware of it, as it is not possible after all to detect a physical damage in the connection of a part that is concealed inside the piston.

Furthermore, in conventional sprayers the cylinder in which the piston slides embraces only the lower part of the piston, conforming the basic pumping volume by moving the lever. The cylinder thus constructed must be bolted to the base of the tank, with a risk of leaks in the base due to poor sealing unless a proper assembly of the equipment is ensured.

Finally, it should be mentioned that in conventional sprayers the connecting rod to the lever that allows a correct motion of the latter is placed on the top of the equipment by means of a pin housed in a transverse orifice of the top end of said connecting rod, giving rise to an unaesthetic appearance and a weak union.

Equipment of this type are described in Spanish Invention Patent with application number 9001604 and in Spanish Utility Model U9600939, which in general have the disadvantages explained above.

### DESCRIPTION OF THE INVENTION

The sprayer disclosed has been designed to solve all the aforementioned problems by means of a number of improvements affecting certain parts and components of the equipment.

Specifically, one of the improvements of the invention consists of the tank having an external surface with a double curvature, to determine a double curvature that resembles that of the user's back: in one case the classically determined curvature in a horizontal sense (the curvature being contained in a plane parallel to the ground) and in the other case the one defined in an upwards sense by the backbone in the upright and forward working position, with the centers of both curvatures being in the in the virtual plane of symmetry, at a certain distance in front of it.

This double curvature, in combination with a special assembly of the actuation lever, gives the equipment its ambidextrous nature with an identical effectiveness in both cases.

Thus, the tank of the invention has a bi-directional ergonomic configuration that allows its perfect adaptation to the user's back, reducing the user's fatigue and simplifying the operation of the pumping group, which is easily actuated with either hand by simply changing the position of the lever.
Another improvement of the invention, specifically related to the tank, is that the lower part of said tank is provided with support legs that, in addition to providing a great sturdiness to the lower part of the tank allow a correct stabilization of the equipment when it rests directly on the ground. In addition, said legs are provided with openings for a simple assembly and removal of the corresponding actuation lever, such that the tank is obtained by the mold insert technique with the legs being produced independently in an injection mold and later inserted in each of the four corners of the base of the tank mold, so that the tank itself is constructed with the legs fully integrated.

Another novel characteristic that also affects the tank is that incorporation of the aforementioned legs results in a tank that is raised a certain height above the ground, enabling the disposition of a collection duct at the central lower area of the tank that concentrates the residual liquid towards the corresponding pump piston.

Another improvement or novel characteristic of the invention relates to the means for attaching the straps with which the equipment is held on the user's back, and that allow a simple and fast change of the operational mode of the equipment. Specifically, there is a part on the top area and two parts on the sides and near the lower end that determine the anchoring means of the straps, so that the top part is characterized in that its extraction, and therefore that of the folded strap, is performed with the aid of a double handle that allows the user to remove the folded strap from its position with a simple pushing and extraction movement, so that between the two handles there is enough space to extract the folded strap and to place it, without time being wasted, in the same orifice but from the opposite side of the tank.

Another improvement of the sprayer equipment is centered on the pumping group, in which the piston-cylinder assembly is characterized in that the corresponding duct for suctioning the product from the corresponding pressure chamber to the outlet orifice is externally connected to the piston body by means of two coupling zones, one defined by a cavity established tightly on the piston lid and through which the product will travel towards the outlet, and another zone defined by a cavity, also tightly fitted that establishes connection with the lower area of the piston and which will receive the product retained under pressure in the corresponding chamber.

In this manner, the suction duct becomes an easily replaceable component, without requiring to discard the piston and allowing to perceive easily possible leaks or malfunctions as it is not enclosed in the piston chamber, as is conventional.

In order to allow a comfortable assembly of the suction duct while ensuring its integrity, the shaft-chamber conformation is determined by two non-concentric cylinders, so that the suction duct is disposed aligned along the entire piston and partially concealed inside a channel placed in the area of greatest diameter of the piston, which channel is not subjected to any internal pressure but simply constitutes a guide for the suction duct towards an upper anchoring on the piston lid, with the lower segment of said duct being fully exposed to allow its handling but adjacent to the part of lesser diameter of the piston that acts as a shaft.

Another improvement of the invention affects the cylinder on which the piston itself is mounted, which cylinder projects upwards to embrace the entire piston, including the chamber defined by it, attaching said cylinder to the corresponding upper orifice of the tank where the sealing problem is easily solved, such that the cylinder is comprised of two non-concentric parts joined tangentially by one of their generating lines, one on the top with a size suitable for circulation of the piston, with a flange on its end to rest on the upper orifice of the tank, and another lower part in which is housed the feeding duct and the cylinder of the shaft of the piston, with a diameter adjusted to ensure a tight fit with a retainer provided for such purpose.

The aforementioned cylinder of the piston is housed in a neck determined by an opening made for such purpose in the top of the tank, and is secured by a bolt without requiring any internal attachment to the tank that would compromise its tightness, so that on its bottom a base filter is fitted that in addition to performing the filtering function prevents the axial movement of the pumping unit.

The tight fit and centering of the piston is achieved by means of a ring of soft material with a low coefficient of friction, positioned above the cylinder and locked in place around it by the displacement towards said cylinder of the aforementioned ring as a result of the compression caused by the bolt attaching the cylinder to the piston. Said ring also ensures tightness of the tank in the area, preventing liquid from leaking accidentally through the opening or orifice provided on the top of the tank to house the entire pumping unit.

This solution prevents the problems suffered by conventional sprayers, where the cylinder of the pumping unit is joined to the tank base by passing bolts which, should they loosen, would result in liquid leaking through the orifices made for them in the tank. Thus, the improvement of the invention allows removing the bolts as the cylinder is attached to the tank only by the aforementioned upper bolt, in order as mentioned before to prevent liquid leaks at the base of the tank and also facilitating the removal and repair of the pumping unit. Additionally, the risk of the user coming in contact with chemical residues that may remain in the tank is reduced.

Another improvement of the invention corresponds to the assembly of the actuation lever, which is designed so that it can be changed without any difficulty from one side to another, that is, so that the equipment can be used by both right-handed and left-handed persons. In addition, the assembly of the connecting rod that relates the top of the equipment to the actuation lever is also a novelty, consisting of a part that is provided on the top lid of the pumping unit that includes an open cylinder to which the vertical segment of the connecting rod is attached and a pair of concentric passages where a horizontal segment of said connecting rod is positioned, so that said rod is secured without requiring bolts or pins and is attached to the lever by a simple pin.

On its part, the lever is mounted on the tank at the bottom end of the latter, at a horizontal segment of said lever that is positioned in corresponding passages provided for such purpose in one pair of the four legs provided for such purpose on the bottom of the tank; that is, on the pair of legs located in correspondence with the edge near one of the sides, allowing to change the position of the lever to establish it in the passages provided on the other two legs so that an ambidextrous use is made possible. Thus, in the vertical position the lever can be extracted by opposing protrusions of it in the form of keys with keyslots established in the corresponding legs, while when the lever is not vertical the protrusions will meet against the legs, preventing the accidental disassembly of the lever.

Another improvement of the sprayer of the invention relates to the assembly of the filter provided on the bottom and on which the pumping unit rests. This filter is not only a support for the pumping unit with respect to the tank to prevent the axial displacement of the assembly, but also acts as a filter for particles that may eventually block the pumping unit, and is also used to house and retain an intake valve for the liquid or product from the tank to the compression chamber.

The tight union of said filter and the pressure cylinder is ensured by an O-ring, providing a perfect longitudinal self-sealing of the pumping unit inside the tank. It is very difficult to achieve this seal in conventional devices as it depends solely on the precision in the manufacture of its components, which is always subject to the variations common in different manufacturing batches.

The equipment is complemented by a stirrer placed inside the tank, which is provided with a hexagonal protrusion defining an improvised Allen wrench that facilitates tightening and loosening of a nut meant to hold the corresponding retainer in the piston, as well as to house the compression valve for the assembly. The stirrer is provided on its upper end with a sort of dovetail-shaped heel for its assembly on a complementary configuration provided on the body of the pumping unit, with the aforementioned stirrer being tightly fitted to the piston in a sense perpendicular to the latter's oscillatory motion, thereby preventing an accidental dislodgement while it is in operation.

Said stirrer has a configuration with an optimized sigmoid profile in order to generate a fluid circulation flow during pumping that facilitates the solution of product particles.

### DESCRIPTION OF THE DRAWINGS

As a complement of the description being made and in order to aid a better understanding of the characteristics of the invention, according to an example of a preferred embodiment, the description is accompanied by a set of drawings where for purposes of illustration and in a non-limiting manner the following is shown:

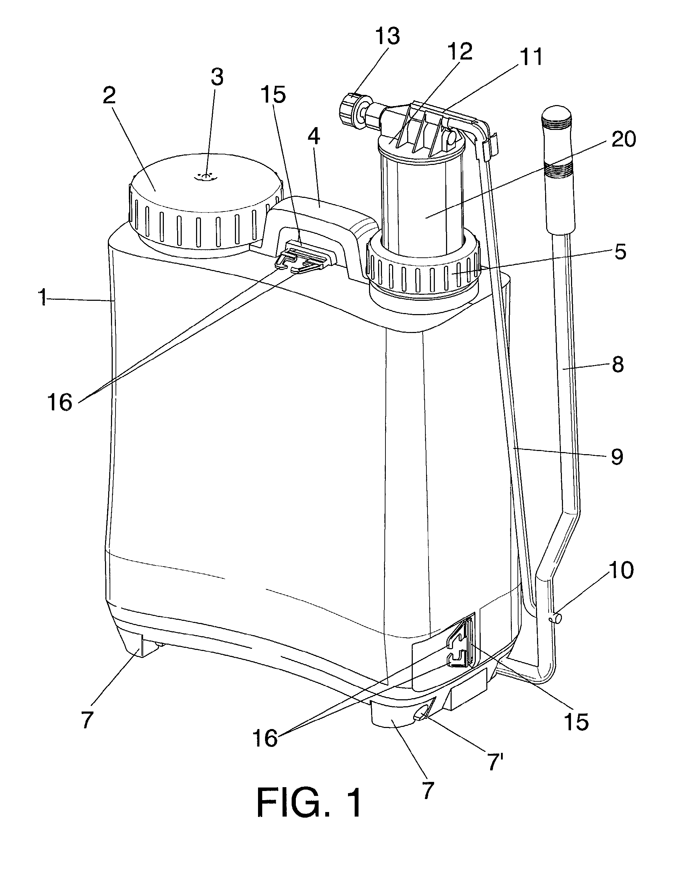

Figure 1 shows a general perspective view of the sprayer equipment object of the invention.
Figure 2 shows a side elevation view of the same sprayer equipment shown in the previous figure.
Figure 3 shows an upper plan view of the equipment, showing in combination with the representation of Figure 2 the ergonomic configuration of the tank for adaptation to the user's back.
Figure 4 shows a sectional view along a vertical plane of the equipment shown in the previous figures, revealing the stirrer inside the tank in an uncoupled position.
Figure 5 shows an enlarged view of the means allowing to assemble and dismount the actuation lever and the impossibility of its displacement once assembled.
Figure 6 shows an enlarged view of the means provided in the lower part for passage of the straps attaching the equipment to the user's waist.

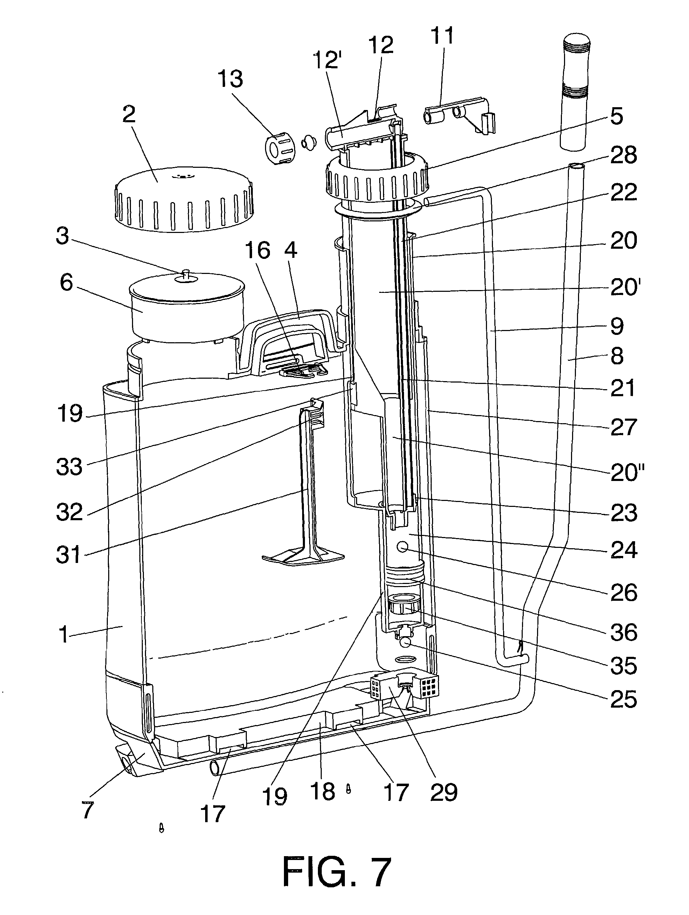

Figure 7 shows a perspective sectional view of the sprayer equipment as a whole.

### PREFERRED EMBODIMENT OF THE INVENTION

In view of the above described figures, it can be seen that the sprayer equipment of the invention is comprised of a tank (1) containing the product to be sprayed, above which is established a discharge nozzle with a corresponding lid (2), provided with an air suction and spill-proof valve (3), with a microperforated filter (6) being provided on said nozzle.

On the top part is also established a handle (4) that makes its transportation considerably simple, as well as incorporating a nut (5) securing the corresponding cylinder (19) of the pumping unit and that will be described further below.

On the bottom part, almost at its corners, the tank is provided with corresponding solid legs (7) that are obtained independently by injection and are placed in the mold with which the tank itself is formed by molding, so that the legs (7) are integrated on the bottom of the tank and constitute a reinforcement of its bottom as well as having other functions that will be described further below.

The equipment is also provided with a manually actuated lever (8) that is attached to a connecting rod (9) by means of a lower segment (10) of said rod (9) which passes through a transverse orifice of the lever (8), secured by a pin, while on the top the connecting rod (9) is attached to a part (11) mounted on the top lid (12) of the piston (20) that is part of the pumping unit. Said top lid (12) is provided with a securing nut (13) for the rubber tube that leads the product to be sprayed to the spray nozzle.

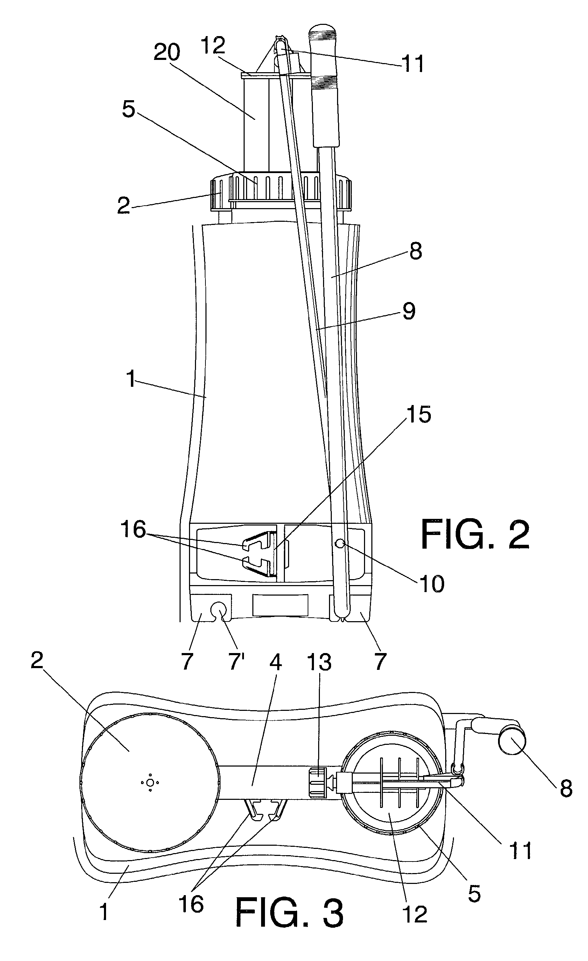

The tank (1), as shown in figures 2 and 3, has a fully ergonomic configuration on both of its sides, so that it has a transverse curvature and a longitudinal curvature, in order to conform perfectly to the corresponding areas of the back of the user.

On its part, the actuation lever (8) is designed so that its position can be changed quickly, that is, so that it can be used with optimal movements by both right-handed and left-handed persons. The fast assembly and removal system is based on the fact that the orifices (7'), provided in the solid legs (7) for housing the horizontal segment of the lever (8), have a keyslot which can be set opposite a protrusion (14) provided in said horizontal segment of the lever (8), such that in the vertical position of the latter the protrusions (14) are placed opposite the keyslots established in the orifices (7') of the legs (7), at which time if the connecting rod (9) is disengaged from the lever (8) simply by removing the pin housed in the outer segment (10) of said rod (9), it is possible by pulling outwards on the lever (8) to remove it and assemble it on the orifices (7'') of the opposite side, as long as it is vertical; after it is mounted the lever (8) and the connecting rod (9) are again connected to each other so that when the lever (8) is turned the protrusions (14) are placed out of opposition with the keyslots so that the axial displacement of the lever (8) is prevented, although it is possible to swivel in its assembly on the orifices (7') of the legs (7).

As regards the attachment and release of the equipment with respect to the user by means of the corresponding straps, the means of passage for said straps consist of a part (15) placed on both the top part (main strap) and on the sides of the lower part (optional lumbar strap), through which parts the straps are passed folded and extracted by a double handle (16) that allows the user to remove the folded strap from its housing by simply pressing and pulling on it. Enough space is left between the two handles (16) to allow extracting the folded strap and placing it again in the same passage, introducing it from the opposite side of the device.

On the lower part of the tank are provided recesses (17) for a correct positioning of the hooks of both ends of the main strap, so that between these recesses is defined a channel (18) for collecting the residual liquid towards the corresponding pumping unit. This channel is established by the elevation of the tank with respect to its legs (7).

As regards the pumping unit, it comprises a cylinder (19) on which is mounted a piston (20) with a longitudinal channel (21) that is displaced from its geometrical axis, with the channel (21) being placed collaterally for assembling and guiding the corresponding suction duct (22) of the sprayer unit, with said duct (22) mounted between the top lid (12) of the piston (20) or pumping unit itself and a cavity or housing (23) provided on the bottom of said piston (20), such that it is possible to see that the latter is provided with a top segment (20') that has a greater diameter that a lower segment (20").

That is, the suction duct (22) is connected externally to the body of the piston (20) at the two extremal coupling areas described above, one corresponding to the top part belonging to the lid (12) and another corresponding to the lower housing (23) formed for such purpose of the piston (20).

On its part, the cylinder (19) is inferiorly provided with a segment (19') with a smaller diameter in which is established the corresponding compression chamber (24), on the bottom of which is provided a check valve (25) that prevents the passage of the product from the tank to said chamber (24); there is a second valve (26) on the lower segment of the piston (20'') that remains closed while the product is entering the compression chamber (24).
When the lever (8) is pulled upwards, the piston (20) rises and the product enters the compression chamber (24) through the valve (25), while when the lever (8) descends the product passes through the valve (26) towards the inside of the piston (20), that has communication with the suction duct (22) as the lower valve (25) closes, so that the suction duct (22) takes the product under pressure from the piston (20) that functions as an accumulator and leads it to the duct (12') established in the top lid (12) of the piston (20) or pumping unit, so that the liquid is ejected through the hose towards the spray nozzle.

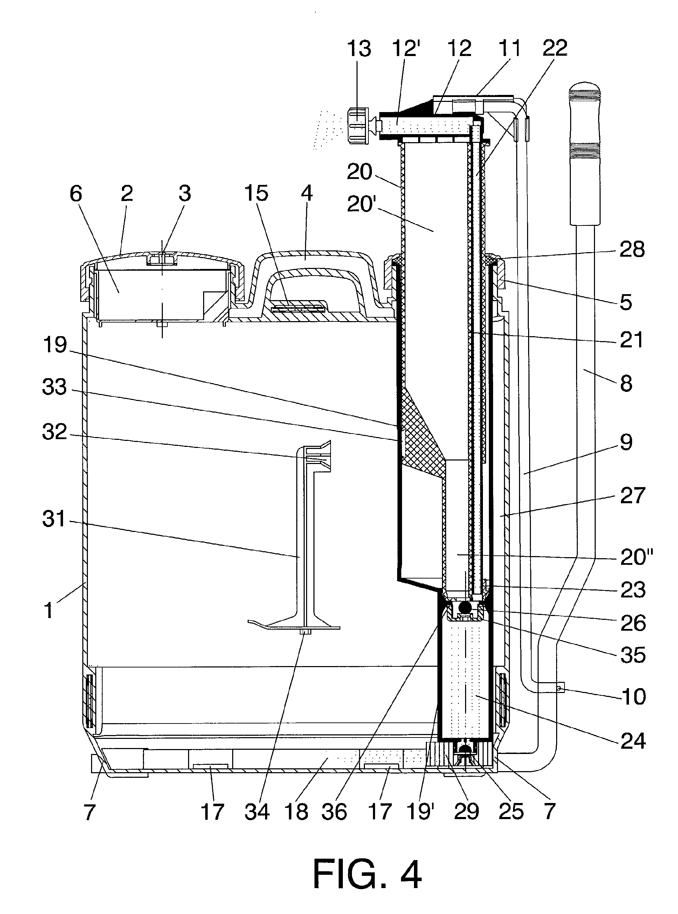

As can be seen in figure 4, the suction duct (22) is aligned along the entire piston (20), remaining concealed in the channel (21) of said piston, such that the lower segment of said suction duct (22) is free, as labeled (27), allowing to access it and be easily changed.

The area of assembly of the valves (25) and (26) and the area of the top lid (12) are provided with the corresponding sealing means to ensure a leak-proof pumping operation.

The cylinder (19) is mounted on the neck of an opening provided for such purpose on the upper part of the tank (1), with said cylinder (19) being locked in place by the aforementioned nut (5), so that the adjustment and perfect centering of the piston (20) on the cylinder (19) is achieved by a ring (28) of a soft material positioned on the top of the cylinder (19), with the ring (28) being trapped against the lateral surface of the piston (20) as a result of the force exerted by tightening the nut (5).

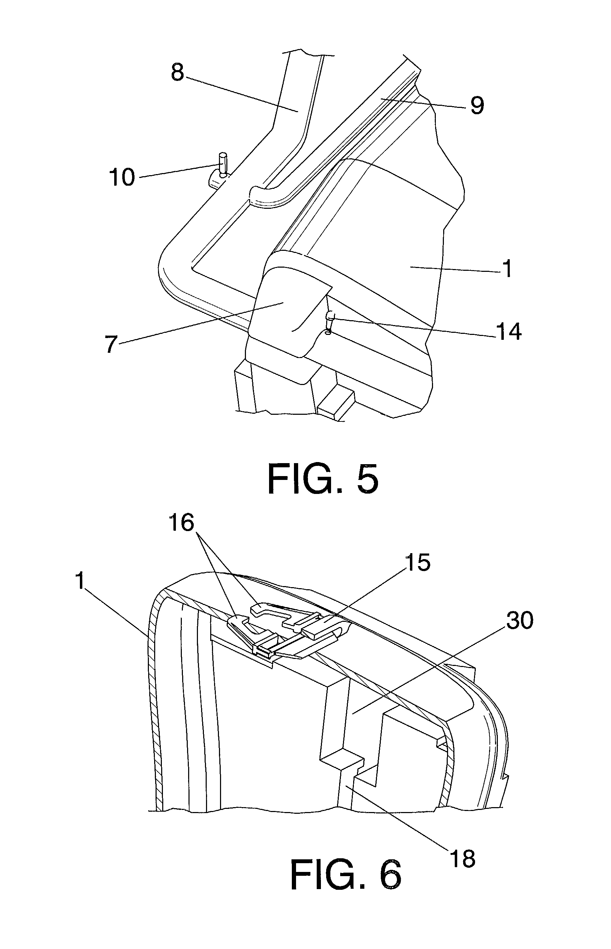

The lower part of the pumping unit rests on a filter (29) that is housed in a recess (30) established for such purpose in the bottom part of the tank, as shown in figure 6, with the filter (29) also determining a means for housing and retaining the intake valve (25).

Finally, inside the tank is mounted a stirrer (31) having a sigmoid shaped profile that allows generating a fluid circulation flow during the pumping to facilitate the solution of product particles. The stirrer (31) is provided on its top end with a dovetail shaped heel (32) complementary of a housing (33) provided for it in the piston (20) or the pumping unit, and oriented perpendicularly to the oscillatory motion of the piston (20), making it unlikely that it will accidentally disengage while in operation. The bottom part of said stirrer (31) is provided with a hexagonal protrusion (34) that acts as an improvised key to facilitate the screwing on and off of a part (35) that, in addition to housing the valve (26), keeps the corresponding retainer (36) on the piston (20).

## Claims

1. Manual sprayer for pesticides and herbicides, comprising a tank containing the active substance to be sprayed and a pumping unit operated by a manual lever joined to a connecting rod that is mounted between the top part of the pumping unit and the lever itself, with said pumping unit consisting of a cylinder inside which moves a piston having a top lid to which is attached the connecting rod joined to the lever, and further comprising a suction duct mounted between a lower chamber and the lid of the piston, as well as including an inner stirrer and external means of attachment for straps by means of which the equipment assembly can be secured to the back of a user, **characterized in that** the tank (1) has a horizontal curvature and a vertical curvature for a correct adaptation to the shape of the user's back, as well as allowing an ambidextrous use; such that the lower part of the aforementioned tank is provided, at its corners, with corresponding legs (7) attachable during the molding operation of the tank (1), with these legs (7) being provided with passages or orifices (7') that allow assembling the manual actuation lever (8) on either side so that it can be used by both right-handed and left-handed persons; with the incorporation of said legs (7) implying that the tank (1) is raised from the ground, thus allowing the existence on the bottom of the tank (1) of a collection channel (18) that concentrates the residual liquid towards the pumping unit; such that the cylinder (19) used to determine the pumping unit is attached on a neck established on an upper opening of the tank (1) by means of a nut (5), while on the bottom it rests on a filter (29) that is housed in a recess (30) established for such purpose in the bottom part of the tank, preventing the axial motion of the pumping unit, with the filter (29) also determining a means for mounting a check and intake valve (25) between the tank (1) and the corresponding compression chamber (24), from where the product or active substance is suctioned by the corresponding suction duct (22), which is mounted inside a channel (21) defined in the piston (20) independently of the chamber of said piston (20).

2. Manual sprayer for pesticides and herbicides, according to claim 1, **characterized in that** the suction duct (22) established in the channel (21) of the piston (20) leads to and is superiorly attached on the corresponding lid (12) that closes the piston (20), establishing communication with the hose that supplies the liquid to be sprayed to the spraying nozzle, while the bottom end of said suction duct (22) is set in a cavity (23) defined for such purpose in the bottom segment (20'') of the piston (20), with an area provided in the latter having an opening (27) that allows accessing the suction duct (22) such that between this end of the lower segment of the piston (20'') is provided a part (35) that acts as a means of support for a one-way valve (26), parallel to which is established the communication between said compression chamber (24) and the lower end of the suction duct (22).

3. Manual sprayer for pesticides and herbicides, according to the above claims, **characterized in that** the fitting of the piston (20) and the cylinder (19) of the pumping unit is determined by a retainer (36), the guidance and centering of the piston inside the cylinder is made by a gasket (28) positioned above the top edge of said cylinder (19) and pressed against the piston (20) by the screw (5) securing the cylinder (19), in addition ensuring a tight seal of the assembly, such that said cylinder (19) is comprised of two non-concentric tubes (19 and 19') tangentially joined by one of their generating lines.

4. Manual sprayer for pesticides and herbicides, according to the above claims, **characterized in that** the orifices (7') of the legs (7) are provided with keyslots that are complementary to protrusions (14) made in the manual actuation lever (8), with said protrusions (14) meeting the keyslots of the orifices (7') of the legs (7) in the vertical position of the lever (8), thus allowing to assemble and disassemble said lever after it is released from the connecting rod (9), while when said lever (8) is in a position other than vertical the protrusions (14) define stops that prevent the axial displacement of the horizontal segment of the lever (8) that is placed in the orifices (7') of the legs (7).

5. Manual sprayer for pesticides and herbicides, according to the above claims, **characterized in that** the connecting rod (9) that is connected on its lower end to the lever (8) is connected on its top to a part (11) that is attached to the corresponding lid (12) of the piston (20), with the attachment to said part (11) being effected by means of a cylindrical segment and cylindrical passages through which passes said top end of the connecting rod (9), which is immobilized in an axial sense but free to revolve with respect to the part (11).

6. Manual sprayer for pesticides and herbicides, according to the above claims, **characterized in that** the anchoring elements (15) for the straps holding the equipment to the user's back are complemented by a double handle(16) that allows the removal of the straps.

7. Manual sprayer for pesticides and herbicides, according to the above claims, **characterized in that** the corresponding stirrer (31) provided inside the tank (1) has a complex, non-planar surface that facilitates the homogenization of the liquid to be sprayed, and is provided on its top part with a dovetail-shaped heel (32) for anchoring in a sense perpendicular to the oscillatory motion of the piston (20), allowing its coupling to a complementary recess (33) made for such purpose in the piston (20) of the pumping unit, while the bottom end of said stirrer (31) ends in a protrusion (34) that determines a key that allows actuation of the part (35) for disassembly from the pumping unit.
